# EUROPÄISCHE PATENTSCHRIFT

(11) **EP 1 278 980 B1**
(45) Veröffentlichungstag und Bekanntmachung des Hinweises auf die Patenterteilung: **22.09.2004**
(21) Anmeldenummer: 01943307.7
(22) Anmeldetag: 02.05.2001
(51) Int. Cl.: F16L 33/207

(54) **FITTING FÜR DEN ANSCHLUSS EINES KUNSTSTOFF- UND/ODER KUNSTSTOFFMETALLVERBUNDROHRES**
FITTING FOR CONNECTING A COMPOSITE PIPE MADE OF PLASTIC AND/OR OF A PLASTIC/METAL
RACCORD DESTINE A RACCORDER UN TUYAU COMPOSITE EN PLASTIQUE ET/OU EN PLASTIQUE/METAL

(30) Priorität: 05.05.2000 DE 10021988
(43) Veröffentlichungstag der Anmeldung: 29.01.2003
(73) Patentinhaber: Uponor Innovation AB, 513 81 Fristad (SE)
(72) Erfinder: RIESSELMANN, Franz-Josef, 49393 Lohne (DE); BRÄGELMANN, Peter, 48607 Ochtrup (DE)
(74) Vertreter: Hilleringmann, Jochen, Dipl.-Ing.
(86) Internationale Anmeldenummer: PCT/EP2001/004909
(87) Internationale Veröffentlichungsnummer: WO 2001/086188

(56) Entgegenhaltungen:
- WO-A-00/15995
- DE-A- 19 545 361
- DE-A- 19 603 228
- DE-A- 19 727 642

## Beschreibung

Die Erfindung betrifft einen Fitting für den Anschluss eines Rohres aus Kunststoff und/oder einem Kunststoff/Metall-Verbundwerkstoff mit einem Fittingkörper aus Kunststoff.

Derartige Fittinge sind aus DE 196 03 228 A bekannt.

Kunststofffittinge erfreuen sich einer zunehmend größeren Akzeptanz im Markt. Ihr Vorteil ist in erster Linie in ihrer Korrosionsbeständigkeit zu sehen. Wie jeder Fittingkörper weist auch ein Kunststoff-Fittingkörper mindestens einen Rohranschlussabschnitt auf, auf den das ende eines anzuschließenden Rohres aufschiebbar ist. Dieses Ende wird dann mittels einer plastisch verformbaren Presshülse auf den Rohranschlussabschnitt des Fittingkörpers aufgepresst. Vom Rohranschlussabschnitt aus erstreckt sich ein Verbindungsabschnitt des Fittingkörpers, der beispielsweise ein Schraubgewinde oder, im Fall eines Verbinders, Bogenstücks oder T-Stücks mit einem einen weiteren Rohranschlussabschnitt tragenden Verbindungsabschnitt verbunden ist. Der Rohranschlussabschnitt ist vom zugeordneten Verbindungsabschnitt des Fittingkörpers durch eine Schulterfläche getrennt, die zur Begrenzung der Aufschiebebewegung des Endes des anzuschließenden Rohres dient bzw. zur axialen Ausrichtung des anzuschließenden Rohrendes auf dem Rohranschlussabschnitt vorgesehen ist.

Bei den herkömmlichen Fittingen erstreckt sich die Presshülse im wesentlichen entlang des Rohranschlussabschnitts, wobei Ausführungsformen von Fittingkörpern existieren, bei denen Presshülse an einem die Schulterfläche bildenden Bund des Fittingkörpers gehalten ist und diesen umgreift.

Auf Grund der Werkstoffauswahl bei Kunststoff-Fittingkörpern sind diese weniger biegesteif als Fittingkörper aus Metall.

Der Erfindung liegt die Aufgabe zu Grunde, einen Kunststofffitting für den Anschluss eines Rohres aus Kunststoff und/oder einem Kunststoff/Metall-Verbundwerkstoff zu schaffen, der über eine erhöhte mechanische Stabilität verfügt.

Zur Lösung dieser Aufgabe wird mit der Erfindung gemäß Anspruch 1 vorgeschlagen.

Bei der Erfindung wird ein Fittingkörper aus Kunststoff eingesetzt, dessen Stabilität erhöht ist, ohne dass dazu die Dicke der Wandung des Fittingkörpers vergrößert werden muss. Die Stabilitätserhöhung wird erfindungsgemäß erreicht durch eine spezielle Presshülse, die neben einem Rohrverpressabschnitt auch einen Endabschnitt aufweist, innerhalb dessen sie den sich an einen Rohranschlussabschnitt anschließenden Verbindungsabschnitt umschließt. Zweckmäßigerweise wird die Presshülse nicht nur innerhalb ihres Rohrverpressabschnitts radial gestaucht, sondern auch in ihrem Endabschnitt gegen den Verbindungsabschnitt gedrückt bzw. gepresst. Der gesamte Fittingkörper innerhalb seiner Verbindungs- und Rohranschlussabschnitte ist dadurch versteift und somit in seiner mechanischen Stabilität und Biegefestigkeit erhöht.

Die Erfindung ist insbesondere bei einem Fitting einsetzbar, dessen Fittingkörper über mehrere Rohranschlussabschnitte und mehrere untereinander verbundene Verbindungsabschnitte verfügt. Bei einem derartigen Fitting handelt es sich beispielsweise um ein Fitting-Bogenstück oder um ein Fitting-T- bzw. Fitting-Y-Stück. Bei einem solchen Fittingkörper ist es zweckmäßig, wenn die einzelnen die Verbindungsabschnitte umgreifenden Presshülsen untereinander überlappen. Dadurch entsteht eine geschlossene Metallaußenschicht um den Kunststoff-Fittingkörper herum, was einerseits hinsichtlich der Sauerstoffdichtigkeit und andererseits in Bezug auf die Stabilität des Fittingkörpers von Vorteil ist.

Um die einander überlappenden Presshülsen einfacher ineinanderschieben zu können, ist gemäß einer weiteren vorteilhaften Ausgestaltung der Erfindung vorgesehen, dass die Presshülsen an ihren einander überlappenden Enden geschlitzt sind bzw. mindestens eine Presshülse an ihrem betreffenden Ende geschlitzt ist.

Die Verbindung der Presshülsen untereinander innerhalb der Überlappungsbereiche erfolgt zweckmäßigerweise gegen unbeabsichtigte Ablösungen gesichert durch beispielsweise einen Kraftschluss, der als Form-, Stoff- und/oder Reibschluss ausgeführt ist. Der Stoffschluss hat darüber hinaus den Vorteil, dass auch die Überlappungsbereiche sauerstoffdicht ausgeführt sein können.

Um beim Verpressen des Rohrverpressabschnitts der Presshülse das Presswerkzeug axial fixiert an der Presshülse ausrichten zu können, ist es zweckmäßig, wenn die Presshülse einen sich in Umfangsrichtung erstreckenden Außenvorsprung aufweist, der mit einer entsprechenden Aufnahmenut des Presswerkzeuges zusammenwirkt. Der umgekehrte Vorgang, dass nämlich die Presshülse eine sich in Umfangsrichtung erstreckende Aufnahmenut für einen Ausrichtvorsprung des Presswerkzeuges aufweist, ist ebenfalls denkbar. Im Falle der Ausbildung der Presshülse mit einem Außenvorsprung kann dieser entweder durch entsprechende Verformung der Wandung der Presshülse oder durch Aufsetzen eines insbesondere aus Kunststoff bestehenden Rings auf die Presshülse ausgebildet sein. Um die Presshülse ferner gegen unbeabsichtigte axiale Verschiebungen auf dem Verbindungsabschnitt bzw. dem Rohranschlussabschnitt axial halten zu können, ist es von Vorteil, wenn auch diesbezüglich zwischen Presshülse und Fittingkörper ein Kraftschluss besteht. Auch hier ist es möglich, diesen Kraftschluss als Stoff-, Form- und/oder Reibschluss auszuführen.

Zur Kontrolle der Lage des Rohranschlussendes auf dem Rohranschlussabschnitt ist es zweckmäßig, wenn die Presshülse radiale Durchbrechungen aufweist, die - im vollständig aufgeschobenen Zustand der Presshülse betrachtet - im Bereich einer Schulterfläche zwischen dem Rohranschlussabschnitt und dem Verbindungsabschnitt des Fittingkörpers und insbesondere derart angeordnet sind, dass die Schulterfläche von außen durch die radialen Durchbrechungen sichtbar ist. Anstelle von radialen Durchbrechungen kann das Material der Wandung der Presshülse in diesem Bereich auch transparent bzw. im wesentlichen transparent sein.

Wie bereits oben dargelegt, kann der Fittingkörper unterschiedliche Formen aufweisen. Im Falle eines einfachen (geradlinigen) Verbinders weist der Fittingkörper zwei geradlinig verlaufende Teilbereiche auf, die jeweils einen Verbindungsabschnitt mit sich an diesen anschließenden Rohranschlussabschnitt aufweisen. Bei winkelförmiger Ausgestaltung des Fittingkörpers erstrecken sich diese beiden Teilbereiche unter einem Winkel von ungleich 180° und insbesondere von im wesentlichen 90° oder, 45°. Schließlich kann der Fittingkörper auch mehr als zwei der zuvor genannten Teilbereiche aufweisen, die dann beispielsweise nach Art eines Y bzw. T untereinander angeordnet und verbunden sind.

Nachfolgend wird die Erfindung anhand der Zeichnung näher erläutert. Im einzelnen zeigen:
- Fig. 1: einen als T-Verbinder ausgebildeten Kunststofffitting und
- Fig. 2: einen Schnitt entlang der Linie II-II der Fig. 1.

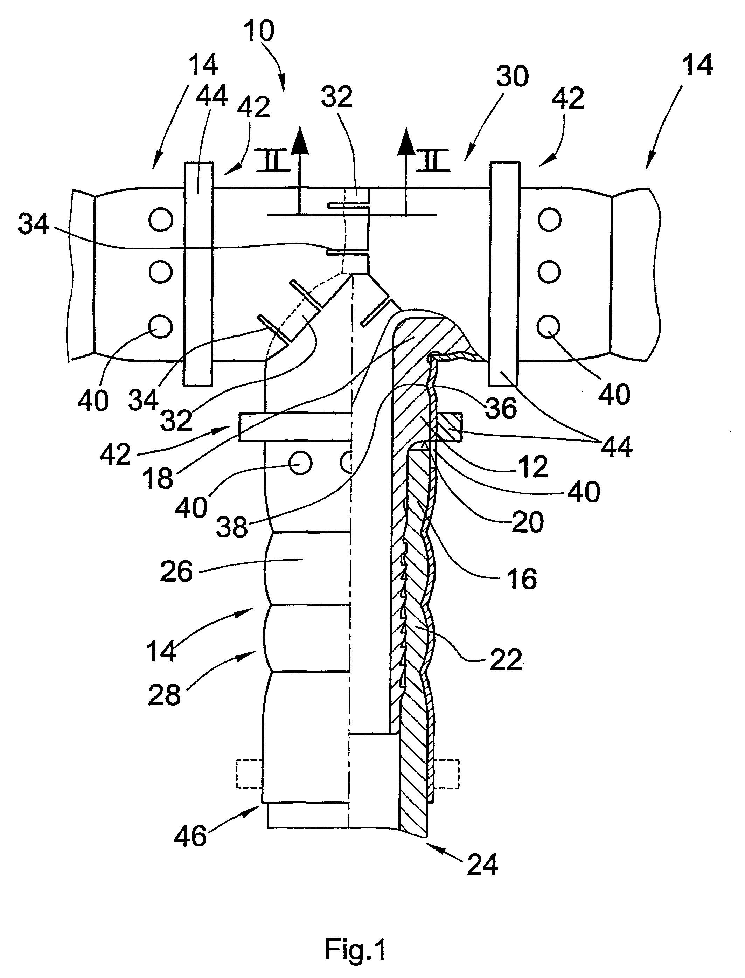

Fig. 1 zeigt einen T-förmigen Pressfitting 10, der einen ebenfalls T-förmigen Fittingkörper 12 aus einem Kunststoffmaterial mit drei Teilbereichen 14 aufweist. Jeder Teilbereich 14 umfasst einen als Stützkörper ausgebildeten Rohranschlussabschnitt 16, an den sich ein Verbindungsabschnitt 18 anschließt. Zwischen beiden Abschnitten 16 und 18 befindet sich eine Schulterfläche 20. Diese Schulterfläche 20 begrenzt den Rohranschlussabschnitt 16 gegenüber dem Verbindungsabschnitt 18 und kann als Anschlagfläche für das Ende 22 eines anzuschließenden Rohres 24 dienen. An den Fitting 10 lassen sich also drei Rohre 24 anschließen.

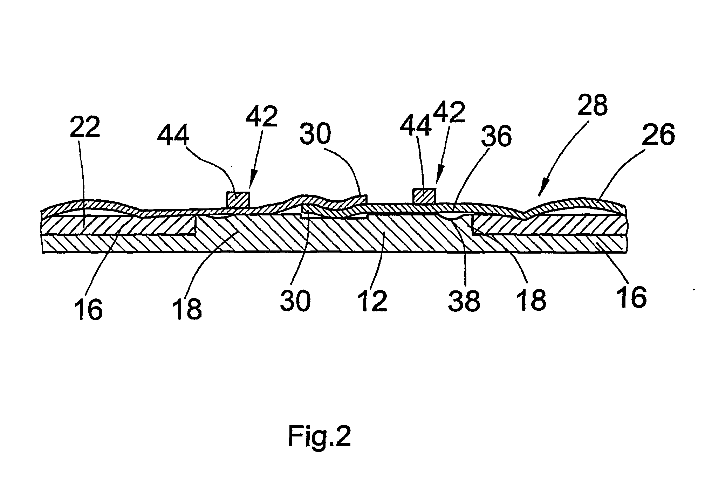

Die Fixierung der Rohrenden 22 an den Rohranschlussabschnitten 16 erfolgt jeweils mittels einer Presshülse 26, die mittels eines (nicht dargestellten) Presswerkzeuges stauchbar ist und somit das Rohrende 22 von außen radial gegen den Rohranschlussabschnitt 16 drückt. Jede Presshülse 26 weist einen Rohrverpressabschnitt 28 und einen Endabschnitt 30 auf, wobei sich die Endabschnitte 30 sämtlicher drei Presshülsen 26 miteinander überlappen. Innerhalb ihrer Endabschnitte 30 umschließen die Presshülsen 26 die Verbindungsabschnitte 18 des Fittingkörpers 12. Die sich überlappenden Enden 32 der Endabschnitte 30 der Presshülsen 26 sind geschlitzt (siehe die Schlitze. 34), so dass die Endabschnitte 30 der Presshülsen 26 ineinanderschiebbar sind. Diese Situation ist beispielsweise in der Schnittansicht gemäß Fig. 2 gezeigt.

Wie ebenfalls anhand von Fig. 2 zu erkennen ist, weisen die Presshülsen 26 im Bereich ihrer Endabschnitte 30 eine sickenförmige radial einwärts gerichtete Verformung 36 auf, zu der korrespondierend innerhalb der Verbindungsabschnitte 18 des Fittingkörpers 12 Verformungen 38 existieren. Durch diesen "Formschluss" sind die Presshülsen 26 auch im unverpressten Zustand am Fittingkörper 12 gehalten. Diese Halterung wird noch durch die einander überlappenden Enden 32 der Presshülsen 26 unterstützt.

Wie bereits oben dargelegt, umschließen die Presshülsen 26 innerhalb ihrer Endabschnitte 30 die Verbindungsabschnitte 18 des Fittingkörpers 12. Die Verbindung von Presshülse und Fittingkörper kann dadurch realisiert sein, dass beide mit der entsprechenden Maßgenauigkeit gefertigt sind. Dadurch entsteht ein Klemm- bzw. Reibsitz der Presshülsen 26 an den Verbindungsabschnitten 18 des Fittingkörpers 12. Eine Alternative besteht darin, dass die Presshülsen 26 im Bereich ihrer Endabschnitte 30 gegen den Fittingkörper 12 gepresst sind, was durch ein entsprechendes Werkzeug bzw. das Presswerkzeug zum Verpressen der Presshülsen 26 in deren Rohrverpressabschnitten 28 realisiert werden kann.

Zusätzlich weisen die Presshülsen 26 Lagekontrollöffnungen 40 auf, mit denen sich von außen die Lage des Rohrendes 22 relativ zum Rohranschlussabschnitt 16 inspizieren/überprüfen lässt. Ferner weisen die Presshülsen 26 im Bereich zwischen ihren Rohrverpressabschnitten 28 und ihren Endabschnitten 30 einen umlaufenden Außenvorsprung 42 auf, der der Führung des Presswerkzeuges dient. Dieser Außenvorsprung 42 ist zweckmäßigerweise als Außenkunststoffring 44 ausgebildet. Der Außenvorsprung 42 kann aber auch, wie in Fig. 1 in gestrichelten Linien angedeutet, an den freien Enden 46 der Presshülsen 26 angeordnet sein.

Das Umschließen des Kunststofffittings 10 mit den metallischen Presshülsen 26 hat den Vorteil, dass dem Kunststoff-Fittingkörper 12 eine erhöhte mechanische Stabilität und Biegefestigkeit verliehen wird. Darüber hinaus stellen die Presshülsen 26 auch eine Sauerstoffbarriere und damit Diffusionssperrschicht dar.

## Patentansprüche

1. Fitting für den Anschluss eines Rohres aus Kunststoff und/oder einem Kunststoff/Metall-Verbundwerkstoff mit
- einem Fittingkörper (12) aus Kunststoff, der mehrere Rohranschlussabschnitte (16) aufweist, auf die jeweils ein Ende (22) eines anzuschließenden Rohres (24) aufschiebbar ist, wobei der Fittingkörper (12) mehrere Verbindungsabschnitte (18) aufweist,
wobei sich jeweils ein Verbindungsabschnitt (18) an einen Rohranschlussabschnitt anschließt und
- mehreren, jeweils einem Rohranschlussabschnitt (16) des Fittingkörpers (12) zugeordneten, plastisch verformbaren Presshülsen (26) zum radialen Verpressen des Rohres (24) mit dem jeweiligen Rohranschlussabschnitt (16) des Fittingkörpers (12),
- wobei jede Presshülse (26) einen Rohrverpressabschnitt (28) und einen bis in den jeweiligen Verbindungsabschnitt (18) des Fittingkörpers (12) hinein überstehenden Endabschnitt (30) zum zumindest partiellen Umschließen des jeweiligen - Verbindungsabschnitts (18) des Fittingkörpers (12) aufweist,
**dadurch gekennzeichnet,**
- **dass** die Endabschnitte (30) der Presshülsen (26) im auf die Verbindungsabschnitte (18) des Fittingkörpers (12) aufgeschobenen Zustand einander überlappen.

2. Fitting nach Anspruch 1, **dadurch gekennzeichnet, dass** das überlappende Ende (32) mindestens einer der eine andere Presshülse (26) umgreifenden Presshülsen (26) geschlitzt ist.

3. Fitting nach Anspruch 1 oder 2, **dadurch gekennzeichnet, dass** die überlappenden Enden (32) der Presshülsen (26) durch einen Kraftschluss, insbesondere einen Stoff-, Form- und/oder Reibschluss gegen unbeabsichtigtes Ablösen aneinander fixierbar sind.

4. Fitting nach einem der Ansprüche 1 bis 3, **dadurch gekennzeichnet, dass** jede Presshülse (26) innerhalb ihres Endabschnitts (30) mit dem jeweiligen Verbindungsabschnitt (18) des Fittingkörpers (12) verpressbar ist.

5. Fitting nach einem der Ansprüche 1 bis 4, **dadurch gekennzeichnet, dass** jeder Rohranschlussabschnitt (16) des Fittingkörpers (12) gegenüber dessen Verbindungsabschnitt (18) durch eine radiale Schulterfläche (20). begrenzt ist und dass der zugehörige Endabschnitt (30) jeder Presshülse (26) über die jeweilige Schulterfläche (20) bis in den Verbindungsabschnitt (18) hinein übersteht.

6. Fitting nach einem der Ansprüche 1 bis 5, **dadurch gekennzeichnet, dass** jede Presshülse (26) einen sich in Umfangsrichtung erstreckenden Außenvorsprung (42) zur axialen Fixierung eines Presswerkzeuges relativ zu der Presshülse (26) aufweist.

7. Fitting nach einem der Ansprüche 1 bis 6, **dadurch gekennzeichnet, dass** der Außenvorsprung (42) durch Verformung der Presshülse (26) und/oder durch ein separates, insbesondere geschlossenes Ringelement (44) gebildet ist.

8. Fitting nach Anspruch 6 oder 7, **dadurch gekennzeichnet, dass** der Außenvorsprung (42) innerhalb des entsprechenden Endabschnitts (30) und/oder des Rohrverpressabschnitts (28) und insbesondere an dessen dem Endabschnitt (30) abgewandten Ende (46) der Presshülse (26) angeordnet ist.

9. Fitting nach einem der Ansprüche 1 bis 8, **dadurch gekennzeichnet, dass** jede Presshüfse (26) radiale Durchbrechungen (40) aufweist, die innerhalb des an den Endabschnitt (30) angrenzenden Bereiches des Rohrverpressabschnitts (28) angeordnet sind.

10. Fitting nach einem der Ansprüche 1 bis 9, **dadurch gekennzeichnet, dass** der Fittingkörper (12) winkelförmig ausgebildet ist und zwei Rohranschlussabschnitte (16) sowie zwei Verbindungsabschnitte (18) aufweist, wobei die Verbindungsabschnitte (18) winklig, insbesondere unter einem. Winkel von im wesentlichen 90° oder im wesentlichen 45° zueinander verlaufen und untereinander verbunden sind und sich die Rohranschlussabschnitte (16) an die Enden der Verbindungsabschnitte (18) anschließen.

11. Fitting nach einem der Ansprüche 1 bis 9, **dadurch gekennzeichnet, dass** der Fittingkörper (12) im wesentlichen Y- oder im wesentlichen T-förmig ausgebildet ist und drei Rohranschlussabschnitte (16) sowie drei Verbindungsabschnitte (18) aufweist, wobei die Verbindungsabschnitte (18) winklig zueinander verlaufen und miteinander verbunden sind und sich die Rohranschlussabschnitte (16) an die Enden der Verbindungsabschnitte (18) anschließen.

12. Fitting nach einem der Ansprüche 1 bis 11, **dadurch gekennzeichnet, dass** der Fittingkörper (12) geradlinig ausgebildet ist und zwei Rohranschlussabschnitte (16) sowie zwei Verbindungsabschnitte (18) aufweist, wobei die Verbindungsabschnitte (18) geradlinig verlaufen und untereinander verbunden sind und sich die Rohranschlussabschnitte (16) an die Enden der Verbindungsabschnitte (18) anschließen.

## Claims

1. Fitting for connecting a pipe of plastics and/or a plastics/metal composite material, comprising
- a fitting body (12) of plastics comprising a plurality of pipe connecting sections (16) to each of which an end (22) of a pipe (24) to be connected is adapted be slid on, wherein the fitting body (12) comprises a plurality of coupling sections (18), wherein one coupling section (18) each abuts on one pipe connecting section, and
- a plurality of plastically deformable pressing sleeves (26) each associated with one pipe connecting section (16) of the fitting body (12) and being adapted to radially press the pipe (24) to the respective pipe connecting section (16) of the fitting body (12),
- wherein each pressing sleeve (26) comprises a pipe pressing section (28) and an end section (30) projecting into the respective coupling section (18) of the fitting body (12), said end section (30) at least partly enclosing the respective coupling section (18) of the fitting body (12),
**characterized in that**
- the end sections (30) of the pressing sleeves (26) overlap each other in the condition as slid onto the coupling sections (18) of the fitting body (12).

2. Fitting according to claim 1, **characterized in that** the overlapping end (32) of at least one of the pressing sleeves (26) encompassing another pressing sleeve (26) is slotted.

3. Fitting according to claim 1 or 2, **characterized in that** the overlapping ends (32) of the pressing sleeves (26) are adapted to be fixed to each other, such that inadvertent separation is prevented, by a force-locking connection, in particular an integral, form-locking and/or frictional connection.

4. Fitting according to one of claims 1 to 3, **characterized in that** each pressing sleeve (26) is adapted to be pressed, within its end section (30), to the respective coupling section (18) of the fitting body (12).

5. Fitting according to one of claims 1 to 4, **characterized in that** each pipe connecting section (16) of the fitting body (12) is defined towards its coupling section (18) by a radial shoulder surface (20), and that the associated end section (30) of each pressing sleeve (26) projects beyond the respective shoulder surface (20) into the coupling section (18).

6. Fitting according to one of claims 1 to 5, **characterized in that** each pressing sleeve (26) comprises an external projection (42) extending in circumferential direction and being adapted for axially fixing a pressing tool relative to the pressing sleeve (26).

7. Fitting according to one of claims 1 to 6, **characterized in that** the external projection (42) is formed by deformation of the pressing sleeve (26) and/or defined by a separate, in particular a closed ring element (44).

8. Fitting according to claim 6 or 7, **characterized in that** the external projection (42) is arranged inside the corresponding end section (30) and/or the pipe pressing section (28) and in particular at the end (46) of the pressing sleeve (26) facing away from the end section (30).

9. Fitting according to one of claims 1 to 8, **characterized in that** each pressing sleeve (26) comprises radial passages (40) arranged inside the portion of the pipe pressing section (28) adjacent to the end section (30).

10. Fitting according to one of claims 1 to 9, **characterized in that** the fitting body (12) is of angular configuration and comprises two pipe connecting sections (16) and two coupling sections (18), wherein the coupling sections (18) extend at an angle, in particular at an angle of essentially 90° or essentially 45° relative to each other and are interconnected, and the pipe connecting sections (16) abut on the ends of the coupling sections (18).

11. Fitting according to one of claims 1 to 9, **characterized in that** the fitting body (12) is of essentially Y- or T-shaped configuration and comprises three pipe connecting sections (16) and three coupling sections (18), wherein the coupling sections (18) extend at an angle relative to each other and are interconnected, and the pipe connecting sections (16) abut on the ends of the coupling sections (18).

12. Fitting according to one of claims 1 to 11, **characterized in that** the fitting body (12) is of rectilinear configuration and comprises two pipe connecting sections (16) and two coupling sections (18), wherein the coupling sections (18) extend rectilinearly and are interconnected, and the pipe connecting sections (16) abut on the ends of the coupling sections (18).

## Revendications

1. Raccord pour le raccordement d'un tube en matière plastique ou en un matériau composite matière plastique / métal comportant
- un corps de raccord (12) en matière plastique, qui comporte plusieurs sections de raccord de tube (16), sur lesquels peut être emmanché respectivement une extrémité (22) d'un tube (24) devant être raccordé, le corps de raccord (12) comportant plusieurs sections de liaison (18), respectivement une section de liaison (18) se raccordant à une section de raccord tubulaire, et
- plusieurs douilles de serrage déformables plastiquement (26), qui sont associées chacune à une section de raccord tubulaire (16) du corps de raccord (12), pour le serrage radial du tube (24) avec la section respective de raccord de tube (16) du corps de raccord (12),
- dans lequel chaque douille de serrage (26) possède une section de serrage de tube (28) et une section d'extrémité (30), qui fait saillie jusque dans la section de liaison respective (18) du corps de raccord (16), pour réaliser l'enveloppement au moins partiel de la section respective de liaison (18) du corps de raccord (12),
**caractérisé en ce**
- **que** les sections d'extrémité (30) des douilles de serrage (26) se chevauchent dans l'état dans lequel elles sont emmanchées sur les sections de liaison (16) du corps de raccord (12).

2. Raccord selon la revendication 1, **caractérisé en ce que** l'extrémité en chevauchement (32) d'au moins l'une des douilles de serrage (26) enserrant l'autre douille de serrage (26) est fendue.

3. Raccord selon la revendication 1 ou 2, **caractérisé en ce que** les extrémités en chevauchement (32) des douilles de serrage (26) peuvent être fixées les unes aux autres au moyen d'une liaison de force, notamment d'une liaison par matériaux compatibles, d'une liaison par formes complémentaires et/ou d'une liaison à frottement, contre un détachement intempestif.

4. Raccord selon l'une des revendications 1 à 3, **caractérisé en ce que** chaque douille de serrage (26) peut être serrée à l'intérieur de sa section d'extrémité (30) avec la section de liaison respective (18) du corps de raccord (12).

5. Raccord selon l'une des revendications 1 à 4, **caractérisé en ce que** chaque section de raccord de tube (16) du corps de raccord (12) est limitée par rapport à sa section de liaison (18), par une surface radiale d'épaulement (20) et que la section d'extrémité associée (30) de chaque douille de serrage (26) fait saillie au-delà de la surface respective d'épaulement (20) jusque dans la section de liaison (18).

6. Raccord selon l'une des revendications 1 à 5, **caractérisé en ce que** chaque douille de serrage (26) comporte une partie saillante extérieure (42) qui s'étend dans la direction circonférentielle et sert à fixer axialement un outil de serrage par rapport à la douille de serrage (26).

7. Raccord selon l'une des revendications 1 à 6, **caractérisé en ce que** l'appendice saillant extérieur (42) est formé par déformation de la douille de serrage (26) et/ou par un élément annulaire séparé et notamment fermé (44).

8. Raccord selon la revendication 6 ou 7, **caractérisé en ce que** l'appendice saillant extérieur (42) est disposé à l'intérieur de la section d'extrémité correspondante (30) et/ou de la section de serrage de tube (28) et notamment sur son extrémité (46), tournée à l'opposé de la section d'extrémité (30), de la douille de serrage (26).

9. Raccord selon l'une des revendications 1 à 8, **caractérisé en ce que** chaque douille de serrage (26) comporte des passages radiaux (40) qui sont disposés à l'intérieur de la zone, qui jouxte la section d'extrémité (30), de la section de serrage de tube (28).

10. Raccord selon l'une des revendications 1 à 9, **caractérisé en ce que** le corps de raccord (12) est agencé avec une forme anguleuse, et comporte deux sections de raccord de tube (16) ainsi que deux sections de liaison (18), les sections de liaison (18) étant anguleuses, et s'étendant notamment en faisant entre elles un angle essentiellement de 90° ou essentiellement de 45° l'une par rapport à l'autre et sont reliées entre elles et raccordent les sections de raccord de tube (16) aux deux extrémités des sections de liaison (18).

11. Raccord selon l'une des revendications 1 à 9, **caractérisé en ce que** le corps de raccord (12) est agencé sensiblement en forme de Y ou sensiblement en forme de T et comporte trois sections de raccord de tube (16) ainsi que trois sections de liaison (18), les sections de liaison (18) s'étendant angulairement entre eux et se raccordant entre elles, et les sections de raccord de tube (16) se raccordant aux extrémités des sections de liaison (18).

12. Raccord selon l'une des revendications 1 à 11, **caractérisé en ce que** le corps de raccord (12) est agencé avec une forme rectiligne et comporte deux sections de raccord de tube (16) ainsi que deux sections de liaison (18), les sections de liaison (18) s'étendant avec une forme rectiligne et étant reliées entre elles, et les sections de raccord de tube (16) se raccordant aux extrémités des sections de liaison (18).
